(19)

Europäisches Patentamt
European Patent Office
Office européen des brevets

(11) **EP 4 431 899 A1**

(12) **EUROPEAN PATENT APPLICATION**

(43) Date of publication:
**18.09.2024 Bulletin 2024/38**

(21) Application number: **24163681.0**

(22) Date of filing: **14.03.2024**

(51) International Patent Classification (IPC):
**G01M 3/26** *(2006.01)*      **G01M 3/28** *(2006.01)*

(52) Cooperative Patent Classification (CPC):
**G01M 3/26; G01M 3/2815**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.03.2023 US 202318121099**

(71) Applicant: **Ecoplant Technological Innovation Ltd 7170509 Modiin (IL)**

(72) Inventors:
- **YAACOV, Aviran**
  **7170509 Modiin (IL)**
- **HAREL, Yaron**
  **7170509 Modiin (IL)**
- **YAKOV, Mordehai**
  **7170509 Modiin (IL)**

(74) Representative: **Murgitroyd & Company**
**165-169 Scotland Street**
**Glasgow G5 8PL (GB)**

(54) **MACHINE LEARNING BASED DETECTION OF COMPRESSED AIR LEAKS**

(57)      Disclosed here is a computer implemented method of detecting leaks in a compressed air system using Machine Learning (ML), comprising identifying one or more shutdown events in a compressed air system comprising one or more compressed air clients consuming compressed air delivered by one or more air compressors, during each shutdown event demand of compressed air by the compressed air client(s) is at least partially reduced, receiving pressure data and flow rate data measured in the compressed air system during each shutdown event, and detecting one or more compressed air leaks in the compressed air system using one or more trained ML models applied to the pressure data and the flow rate data. The ML model(s) are trained to identify a plurality of compressed air leak patterns based on pressure and flow rate data.

EP 4 431 899 A1

**Description**

**FIELD AND BACKGROUND OF THE INVENTION**

The present invention relates, in some embodiments thereof, to detecting leaks in compressed air systems and, more specifically, but not exclusively, to detecting leaks in compressed air systems using Machine Learning (ML) models trained to learn compressed air leak patterns.

Compressed air leaks present a major challenge in modem plants, factories, and/or any other manufacturing site, delivery infrastructure and/or the like which comprise compressed air driven machinery and/or delivers compressed air via supply lines. It is shown that the compressed air lost via such leaks may constitute to a significant amount of the overall compressed air delivered and/or consumed in compressed air systems. For example, United States (US) Department of Energy estimates that up to 50% of generated compressed air is lost due to air leaks.

Detecting air leaks, however, may be highly challenging since compressed air systems are typically functional around the clock and discerning between compressed air consumed by machinery and compressed air lost due to air leaks may be very difficult and highly inaccurate. In addition, the compressed air system, its supply station, pipelines, and compressed air machinery may be highly complex making it almost impossible to detect and pinpoint holes, fractures, and/or the like through which compressed air may leak. Also, since air is invisible and air leak noise may be obscured by background noise, detection of compressed air leaks through visual and/or audible means may be highly challenging.

**SUMMARY OF THE INVENTION**

An objective of the embodiments of the disclosure is to provide a solution for detecting leaks in compressed air systems which mitigates or solves the drawbacks and problems of conventional solutions. The above and further objectives are solved by the subject matter of the independent claims. Further advantageous embodiments can be found in the dependent claims.

According to a first aspect of the present invention there is provided a computer implemented method of detecting leaks in a compressed air system using ML, comprising:

- Identifying one or more shutdown events in a compressed air system comprising one or more compressed air clients consuming compressed air delivered by one or more air compressors. During the one or more shutdown events demand of compressed air by the one or more compressed air clients is at least partially reduced.
- Receiving pressure data and flow rate data measured in the compressed air system during the one or more shutdown events.
- Detecting one or more compressed air leaks in the compressed air system using one or more trained ML models applied to the pressure data and the flow rate data. The one or more trained ML. models are trained to identify a plurality of compressed air leak patterns based on pressure and flow rate data.

According to a second aspect of the present invention there is provided a system for detecting leaks in a compressed air system using ML, comprising one or more processors configured to execute a code. The code comprising:

- Code instructions to identify one or more shutdown events in a compressed air system comprising one or more compressed air clients consuming compressed air delivered by one or more air compressors. During the one or more shutdown event demand of compressed air by the one or more compressed air clients is at least partially reduced.
- Code instructions to receive pressure data and flow rate data and flow rate data measured in the compressed air system during the one or more shutdown events. Code instructions to detect one or more compressed air leaks in the compressed air system using one or more trained ML models applied to the pressure data and the flow rate data. The one or more trained ML models are trained to identify a plurality of compressed air leak patterns based on pressure and flow rate data.

In a further implementation form of the first, and/or second aspects, the one or more trained ML models are trained to detect the one or more compressed air leaks based on analysis of the pressure data and the flow rate data accumulated during a predefined time period.

In a further implementation form of the first, and/or second aspects, the pressure data and the flow rate data are measured by one or more pressure sensors and one or more flow sensors respectively which are deployed in the compressed air system.

In a further implementation form of the first, and/or second aspects, the pressure data used for detecting the one or more compressed air leak is measured by one or more selected closest pressure sensors which are located at a shortest distance from the one or more flow sensors among a plurality of pressure sensors deployed in the compressed air system.

In an optional implementation form of the first, and/or second aspects, the one or more trained ML models are further trained to detect the one or more compressed air leaks based on analysis of aggregated flow rate data aggregating flow rate data measured by a plurality of flow sensors deployed to measure the air flow' rate at different locations in the compressed air system.

In an optional implementation form of the first, and/or second aspects, the one or more trained ML models are further trained to detect the one or more compressed air leaks based on analysis of an averaged air flow rate averaging the measured air flow rate to compensate for compressor load and unload periods.

In an optional implementation form of the first, and/or second aspects, the one or more trained ML models are further trained to detect the one or more compressed air leaks based on reference pressure and/or reference air flow defining typical demand of compressed air in the compressed air system having no compressed air leaks.

In an optional implementation form of the first, and/or second aspects, the one or more trained ML models are further trained to detect the one or more compressed air leaks based on normalized flow rate data in which the air flow rate is normalized according to the pressure.

In an optional implementation form of the first, and/or second aspects, an amount of leaked compressed air is estimated by:

- Receiving a plurality of air flow rates measured in the compressed air system for a plurality of corresponding pressure levels.
- Computing a flow to pressure relation based on the plurality of measured air flow rates and the plurality of corresponding pressure levels, Theflow to pressure relation is indicative of the one or more compressed air leaks which induces a pressure dependent air flow rate.
- Inferring the amount of leaked compressed air based on the flow to pressure relation which is indicative of a pressure dependent air flow rate induced by the one or more air leaks.

In an optional implementation form of the first, and/or second aspects, the one or more air compressors are actively controlled to deliver compressed air to induce the plurality of pressure levels in the compressed air system.

In an optional implementation form of the first, and/or second aspects, the one or more shutdown events are identified by the one or more trained ML models which are further trained to detect one or more shutdown events based on measured pressure data and flow rate data.

In an optional implementation form of the first, and/or second aspects, the one or more trained ML models are further trained to filter out one or more potential shutdown events detected while the air flow rate in the compressed air system exceeds a certain threshold.

In a further implementation form of the first, and/or second aspects, the one or more shutdown events are identified according to an indication received from one or more control units of the compressed air system.

In a further implementation form of the first, and/or second aspects, the one or more trained ML models are trained to identify one or more of the plurality of compressed air leak patterns using a plurality of training samples comprising pressure data and flow rate data measured in one or more another compressed air systems having one or more compressed air leaks and not having compressed air leaks.

In a further implementation form of the first, and/or second aspects, the one or more trained ML models are trained to identify one or more of the plurality of compressed air leak patterns using a plurality of training samples comprising pressure data and flow rate data measured in the one or more compressed air systems while having one or more compressed air leaks and while not having compressed air leaks.

In an optional implementation form of the first, and/or second aspects, one or more alerts are transmitted to report the one or more detected compressed air leaks.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

Implementation of the method and/or system of embodiments of the invention can involve performing or completing selected tasks automatically. Moreover, according to actual instrumentation and equipment of embodiments of the method and/or system of the invention, several selected tasks could be implemented by hardware, by software or by firmware or by a combination thereof using an operating system.

For example, hardware for performing selected tasks according to embodiments of the invention could be implemented as a chip or a circuit. As software, selected tasks according to embodiments of the invention could be implemented as a plurality of software instructions being executed by a computer using any suitable operating system. In an exemplary embodiment of the invention, one or more tasks according to exemplary embodiments of methods and/or systems as described herein are performed by a data processor, such as a computing platform for executing a plurality of instructions. Optionally, the data processor includes a volatile memory for storing instructions and/or data and/or a non-volatile storage, for example, a magnetic hard¬ disk and/or removable media, for storing instructions and/or data. Optionally, a network connection is provided as well. A display and/or a user input device such as a keyboard or mouse are optionally provided as well.

BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars are shown by way of example and for purposes of illustrative discussion of embodiments of the invention. In this regard, the description taken with the drawings makes apparent to those skilled in the art how embodiments of the invention may be practiced.

In the drawings:

FIG. 1 is a flowchart of an exemplary process of detecting leaks in compressed air systems using trained machine learning, according to some embodiments of the present invention;

FIG. 2 is a schematic illustration of an exemplary system for detecting leaks in compressed air systems using trained machine learning, according to some embodiments of the present invention; and

FIG. 3A, FIG. 3B, FIG. 3C, FIG. 3D, FIG. 3E, and FIG. 3F are graph charts of exemplary compressed air leak patterns learned by trained machine learning models used to detect leaks in compressed air systems, according to some embodiments of the present invention.

**DESCRIPTION OF SPECIFIC EMBODIMENTS OF THE INVENTION**

The present invention relates, in some embodiments thereof, to detecting leaks in compressed air systems and, more specifically, but not exclusively, to detecting leaks in compressed air systems using ML models trained to learn compressed air leak patterns.

According to some embodiments of the present invention, there are provided methods, systems and computer program products for detecting compressed air leaks in one or more compressed air systems.

The compressed air system may comprise one or more compressed air clients, for example, a machine, a utility, a system, and/or the like which may consume compressed air delivered to the system by one or more air compressors, for example, a Variable-Speed Drive (VSD) air compressor, a fixed-speed compressor, and/or the like.

The leaks of compressed air may be detected using one or more ML models, for example, a neural network, such, as for example, a convolutional Neural Network (CNN), a Recurrent Neural Networks (RNN), a Deep Neural Networks (DNN), a classifier, a Support Vector Machine (SVM) and/or the like trained to learn, estimate and identify a plurality of compressed air leak patterns based on air pressure and flow rate data captured in one or more compressed air systems.

In particular, the ML model(s) may be trained to identify compressed air leak patterns typical to shutdown events during which the consumption of compressed air by the compressed air clients is at least partially reduced and leaks if compressed air may therefore become more apparent.

The term shutdown event as used here refers to a time period during which the consumption of compressed air by one or more of the compressed air clients may be at least partially reduced, typically significantly reduced and possibly completely stopped. The shutdown events do not relate to overall purposely initiated shutdowns, for example, a plant shutdown, a maintenance session, and/or the like during which the compressed air clients are turned off and do not consume (demand) compressed air. As such, the shutdown events relate to reduced manufacturing activity time periods during which the compressed air consumption by one or more of the compressed air clients is reduced or stopped as part of its normal operation cycle, for example, as result of low production load, during recess, workers' break, and/or the like.

The ML model(s) may be trained in one or more supervised, semi-supervised, and/or unsupervised learning session using annotated training datasets and/or unlabeled training datasets comprising a plurality of training samples each comprising pressure data measured in one or more compressed air systems and corresponding flow rate data measured at the same time.

Optionally one or more of the ML model(s) may be further trained to identify one or more of the shutdown events based on pressure and flow rate data captured in one or more compressed air systems which may be indicative of reduced manufacturing activity compared to normal manufacturing activity.

The trained ML model(s) may be applied to pressure and flow sensory data measured by one or more pressure sensors and flow sensors respectively which are deployed in a compressed air system during one or more shutdown events in order to automatically identify, predict, and/or estimate one or more compressed air leaks in the respective system based on the learned compressed air leak patterns. The trained ML model(s) may further compute a probability score for the estimated compressed air leak(s).

Optionally, an amount and/or percentage of compressed air that is leaked in the compressed air system via the air leak(s) may be computed.

Using trained ML models to detect compressed air leaks in compressed air systems during shutdown events may present major advantages and benefits compared to existing leak detection systems and methods.

First, detecting compressed air leak based on pressure and flow rate data measured momentarily or even over prolonged time periods as may be done by the existing methods may be highly inaccurate, unreliable, and ineffective since it may be highly difficult and typically impossible to discern between compressed air consumed by compressed air clients and leaked compressed air. In contrast, using ML model(s) trained to identify compressed air leak patterns using large training datasets comprising pressure and flow rate data collected over time from multiple compressed air systems may be highly suitable and efficient for detecting air leaks according to the learned leak patterns with very high performance, for example, accuracy, robustness, reliability, integrity, and/or the like.

Moreover, training the ML model(s) to learn compressed air leak patterns and applying them to detect compressed air leaks accordingly during shutdown events may further increase leak detection performance of the ML model(s). This is because during a shutdown event, while the compressed air clients consume reduced (typically little) volume of compressed air, and potentially no compressed air, the main demand of compressed air may be attributed to leaks. The ML model(s) trained using pressure and flow rate data captured during the shutdown events may therefor evolve, adjust and adapt to learn and identify compressed air consumption patterns which are mostly induced by compressed air leaks rather than by consumption (demand) of compressed air by the compressed air clients.

Furthermore, automatically detecting compressed air leaks during shutdown events which, as described herein before, do not include full shutdown of the compressed air system, may reduce and in fact eliminate the need to completely shut down the compressed air system to detect possible air leaks as may be done by the existing methods. Detecting leaks during local and/or short term shutdown events may therefore significantly reduce impact on production compared to detecting such leaks during initiated, and/or scheduled full shutdown events, in which most if not all production units are stopped, thus essentially enforcing production cease which may be costly in terms of reduced production, disrupted delivery times, and other supply chain impacts.

Using the trained ML model(s) to detect compressed air leaks may be significantly more efficient, low cost and/or scalable compared to using special equipment, for example, ultrasonic noise detectors for detecting compressed air leaks as may be done by the existing methods. Such special equipment may be expensive and in order to detect leaks must be moved along all elements of the compressed air system including pipes which may extend over long distances making it very time consuming, un-scalable and inefficient.

In addition, training the ML model(s) to detect shutdown events may further reduce cost, complexity, time and/or effort by eliminating manual intervention, dependency on other elements of the compressed air system, and/or interoperability with them for receiving indications of the shutdown events.

Moreover, the ML model(s) are adapted to detect compressed air leaks based on pressure and flow rate data which is measured, captured and/or collected by sensors which are typically already deployed in most if not all compressed air systems. The need for additional equipment, sensors and/or other resources may be thus significantly reduced and typically eliminated thus significantly reducing cost, effort, time, and/or the like for deployment, maintenance, and/or operation. This in turn, may significantly increase scalability, adoption, and/or integration of the ML based leak detection into new and/or existing compressed air systems.

Also, in many deployments sensors, and specifically flow rate sensors may be deployed in each production line which may enable the trained ML model(s) to detect local, temporary shutdown events of specific production lines and further detect compressed air leaks in these temporary shut down production lines. This which may enable pinpointing the compressed air leaks to specific production lines.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Any combination of one or more computer readable medium(s) may be utilized. The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer program code comprising computer readable program instructions embodied on a computer readable medium may be transmitted using any appropriate medium, including but not limited to wireless, wire line, optical fiber cable, RF, etc., or any suitable combination of the foregoing.

The computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

The computer readable program instructions for carrying out operations of the present invention may be written in any combination of one or more programming languages, such as, for example, assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages.

The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardwarebased systems that perform the specified functions or acts or carry out combinations of special purpose hardware and computer instructions.

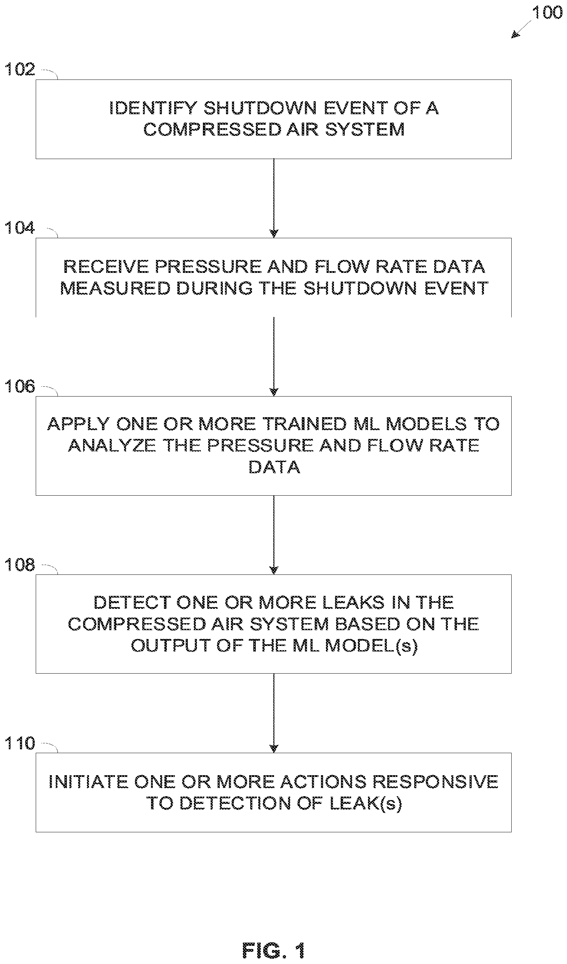

Referring now to the drawings, FIG. 1 is a flowchart of an exemplary process of detecting leaks in compressed air systems using trained machine learning, according to some embodiments of the present invention.

An exemplary process 100 may be executed to detect one or more leaks in one or more compressed air systems each comprising one or more compressed air clients which may consume compressed air delivered to the systems by one or more air compressors.

Specifically, the compressed air leaks may be detected using one or more ML models trained to learn, estimate and identify a plurality of compressed air leak patterns in one or more compressed air systems based on air pressure and flow rate data captured in the system(s). In particular, the ML model(s) may be trained to identify the compressed air leak patterns during shutdown events in which the compressed air clients at least partially reduce their compressed air consumption and leaks if compressed air may therefore become more apparent.

The trained ML model(s) may be applied to pressure and flow sensory data measured in a compressed air system during one or more shutdown events to identify and/or estimate one or more compressed air leaks in the system and optionally compute a probability score for the estimated compressed air leak(s).

One or more compressed air leaks may be thus detected based on the output, i.e., the estimation of the ML model(s).

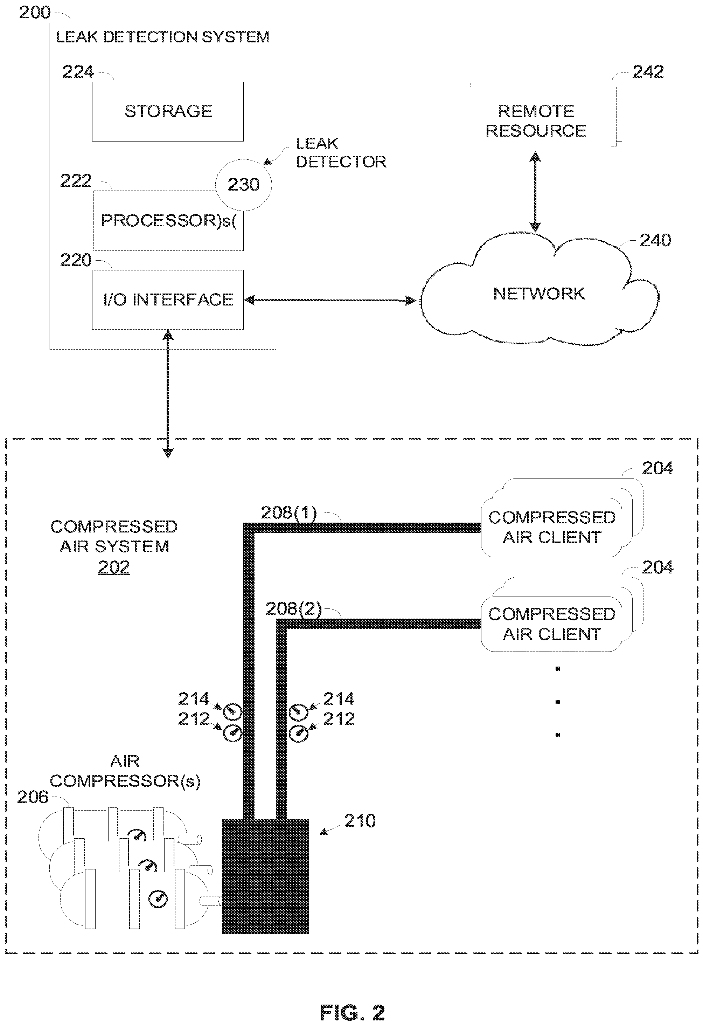

Reference is also made to FIG. 2, which is a schematic illustration of an exemplary system for detecting leaks in compressed air systems using trained machine learning, according to some embodiments of the present invention.

A leak detection system 200, for example, a server, a computing node, a cluster of computing nodes and/or the like may be deployed to detect, estimate, predict and/or identify one or more compressed air leaks in a compressed air system 202, for example, a plant, factory, a mine, a delivery system, a pipe infrastructure and/or the like.

The compressed air system 202 may comprise one or more compressed air clients 204, for example, a machine, a utility, a system, and/or the like which may consume compressed air delivered to the compressed air system 202 by one or more air compressors 206, for example, a VSD air compressor, a fixed-speed compressor, and/or the like.

The compressed air system 202 may employ one or more architectures, structures and/or deployments. For example, the compressed air system 202 may comprise one or more production lines 208, interchangeably designated distribution lines and/or conveyance lines which are distinct from each other such that each production line 208 may comprise one or more compressed air clients 204 which may consume compressed air delivered by one or more of the air compressors 206 via compressed air conveyance infrastructure (e.g., pipes) separate from the other production lines 208.

Moreover, the air compressors 206 may be deployed and/or distributed in the compressed air system 202 according to one or more deployments. For example, one or more air compressors 206 may be deployed together to a Compressed Air (CA) station 210 for supplying (delivering) compressed air to multiple production lines 208. In another example, each CA station 210 may be adapted to deliver compressed air to a single respective production line 208 such that a compressed air system 202 which includes multiple production lines 208 may have multiple CA station 210 each delivering compressed air to a respective production line 208. These deployments are exemplary only and should not be construed as limiting since other deployments, for example, combinations and/or derivations of these deployment may apply to the compressed air system 202.

Furthermore, in case one or more of the production lines 208 comprises multiple compressed air clients 204, these clients 204 may be grouped together at the far end of the respective production line 208 away from the CA of air compressor(s) 206 and/or the client's 204 of the respective production line 208 may be distributed along the production line 208.

One or more pressure sensors 212 and one or more flow sensors 214 may be deployed to measure air pressure and air flow rate respectively in the compressed air system 202. The pressure sensor(s) 212 may employ one or more pressure sensing technologies, for example, capacitive, electromagnetic, piezoelectric, potentiometric, strain-gauge, optical, force balancing, and/or the like to measure the air pressure at its location in the compressed air system 202. The flow sensor(s) 214 may employ one or more flow rate sensing technologies, for example, piston and//or rotary meter, gear meter, turbine flowmeter, Woltman meter, jet meter, and/or the like.

Optionally, one or more of the pressure sensor 212 may be integrated with respective flow sensors 214. Moreover, such integrated sensors may employ one or more pressure based flow rate sensing technologies, for example, Ventura meter, orifice plate, Dall tube, Pitot tube, and/or the like which may simultaneously measure both pressure and flow rate.

The pressure sensor(s) 212 and flow sensor(s) 214 may be distributed in the compressed air system 202 according to one or more deployments. For example, a single pressure sensor 212 and a single flow sensor 214 may be deployed in each production line 208 at a certain location, for example, at the entrance of compressed air to the respective production line 208 at the air compressor(s) 206 end, at the middle of the respective production line 208, and/or the like. In another example, multiple flow sensors 214 may be deployed in each of one or more production lines 208, for example, at the entrance of compressed air, at the end of the respective production line 208 near the compressed air client(s) 204, along the respective production line 208, at the entrance to each compressed air client 204 of the respective production line 208, and/or the like. In some sensor deployments, while at least one pressure sensor 212 may be deployed in each production line 208, one or more production lines 208 may lack a dedicated flow sensor 214, i.e., not even one flow sensor 214 may be deployed in the respective production line 208.

Each of the sensors, i.e., the pressure sensor 212 and the flow sensor 214, may be adapted to connect to one or more wired and/or wireless communication channels, networks, interconnections and/or the like through which they may transmit the values of measured air pressure and air flow.

The leak detection system 200 may comprise an Input/Output interface 220, a processor(s) 222 for executing the process 100 to detect compressed air leaks and a storage 224 for storing code (program store) and/or data.

The I/O interface 220 may include one or more wired and/or wireless interconnections, ports, and/or interfaces, for example, a Universal Serial Bus (USB) interface, a serial port, a Controller Area Network (CAN) bus interface, a Radio Frequency (RF), a Wireless Local Area Network (WLAN) interface, and/or the like.

Via the I/O interface 220, the leak detection system 200 may connect and communicate with the pressure sensor(s) 212 and the flow sensor(s) 214 deployed in the compressed air system 202 to receive pressure and flow rate data captured and measured by the sensors. Optionally, the leak detection system 200 may also communicate with one or more of the air compressors 206 via the I/O interface 220.

The I/O interface 220 may further include one or more wired and/or wireless network interfaces for connecting to a network 204 comprising one or more wired and/or wireless networks, for example, a Local Area Network (LAN), a Wide Area Network (WAN), a Metropolitan Area Network (MAN), a cellular network, the internet and/or the like. Via the I/O interface 220, the leak detection system 200 may therefore communicate with one or more remote network resources 242 connected to the network 240, for example, a server, a storage server, a data center, a database, a cloud service, and/or the like.

The processor(s) 222, homogeneous or heterogeneous, may include one or more processing nodes and/or cores arranged for parallel processing, as clusters and/or as one or more multi core processor(s).

The storage 224 may include one or more non-transitory persistent storage devices, for example, a Read Only Memory (ROM), a Flash array, a Solid State Drive (SSD), a hard drive (HDD) and/or the like. The storage 224 may also include one or more volatile memory devices, for example, a Random Access Memory (RAM) component, a cache and/or the like. The storage 224 may further comprise one or more network storage devices, for example, a storage server, a Network Accessible Storage (NAS), a network drive, a database server and/or the like accessible through the I/O interface 220.

The processor(s) 222 may execute one or more software modules such as, for example, a process, a script, an application, an agent, a utility, a tool, an Operating System (OS) and/or the like each comprising a plurality of program instructions stored in a non-transitory medium (program store) such as the storage 224 and executed by one or more processors such as the processor(s) 222.

The processor(s) 222 may further include, integrate and/or utilize one or more hardware modules available in the leak detection system 200, for example, a circuit, a component, an Integrated Circuit (IC), an Application Specific Integrated Circuit (ASIC), a Field Programmable Gate Array (FPGA), a Digital Signals Processor (DSP), a Graphic Processing Unit (GPU), a network processor, an Artificial Intelligence (AI) accelerator and/or the like.

As such, the processor(s) 222 may execute one or more functional modules, for example, a leak detector 230, for executing the process 100, which may be utilized by one or more software modules, one or more of the hardware modules and/or a combination thereof. It should be noted that the process 100 and/o part thereof may be executed by one or more of the processors of the processor(s) 222 if it comprises multiple processors. However, it is possible that one or more of such a multi-processor processor(s) 222 may not participate at all in the execution of the process 100.

Optionally, the leak detection system 200, specifically the leak detector 230 may be provided, executed and/or utilized at least partially by one or more cloud computing services, for example, Infrastructure as a Service (IaaS), Platform as a Service (PaaS), Software as a Service (SaaS), and/or the like provided by one or more cloud services, cloud infrastructures, and/or the like such as, for example, Google Cloud, Microsoft Azure, Amazon Web Service (AWS) and Elastic Compute Cloud (EC2), IBM Cloud, and/or the like.

The process 100 is described for detecting compressed air leaks in a single compressed air system 202 using ML model(s) applied to pressure and flow rate sensory data captured in the compressed air systems 202. This, however, should not be construed as limiting since, as may be apparent to a person skilled in the art, the process 100 may be easily and intuitively expanded and scaled to detect compressed air leaks in a plurality of compressed air systems such as the compressed air system 202 by applying ML model(s) to pressure and flow rate sensory data captured respectively in the compressed air systems 202.

As shown at 102, the process 100 starts with the leak detector 230 identifying one or more shutdown events.

During the shutdown events the consumption of compressed air by one or more of the compressed air clients 204 may be at least partially reduced, typically significantly reduced and possibly completely stopped. Specifically, the shutdown events as termed herein do not relate to overall purposely initiated shutdown and turn¬ off of the compressed air clients 204, for example, a plant shutdown, a maintenance, and/or the like. Rather the shutdown events relate to time periods during which the compressed air consumption by one or more of the compressed air clients 204 is reduced or stopped as part of its normal operation cycle, for example, as result of low production load, during recess, workers' break, and/or the like.

The leak detector 230 may identify one or more of the shutdown events according to one or more external indications received from one or more control units of the compressed air system 202, for example, control systems, control networks, control logic and /or the like. For example, the leak detector 230 may communicate, via the I/O interface 220, with one or more control systems such as, for example, Supervisory control and data acquisition (SCADA) and/or the like deployed to control one or more machines, devices, systems, sensors and/or the like in the compressed control system 202. The leak detector 230, communicating with such control system(s) which monitor, control, and/or manage one or more of the compressed air clients 204, may receive, from these control system(s), one or more indications indicating that one or more of the compressed air clients 204 is in shutdown mode, specifically in terms of their compressed air consumption which is at least partially reduced and possibly complete stopped.

According to some embodiments of the present invention and as described in further detail herein after, the leak detector 230 may identify one or more of the shutdown events using one or more ML models which are typically trained to identify compressed air leak patterns.

For brevity, the following steps of the process 100 are described herein after with respect to a single shutdown event. However, the same may be applied for a plurality of shutdown events.

As shown at 104, the leak detector 230 may receive pressure data and flow rate data captured, during the shutdown event, by one or more of the pressure sensors 212 and one or more of the flow sensors 214 respectively deployed in the compressed air system 202.

The pressure data and the flow rate data is captured by the pressure sensor(s) 212 and the flow sensor(s) 214 and accumulated during a predefined sampling time period (window), for example, 30 minutes, 60 minutes, 90 minutes, 120 minutes and/or the like.

The leak detector 230 may collect pressure and flow rate data, which is later used to detect compressed air leaks, from pressure sensor(s) 212 and the flow sensor(s) 214 according to architecture, and/or structure of the compressed air system 202 and/or according to deployment parameters of the sensors.

For example, assuming a compressed air system 202 comprises multiple production lines 208 each deployed with a single pressure sensor 212 and a single flow sensor 214. In such case, the pressure and flow rate data used to detect leaks in each of one or more of the production lines 208 may be collected by the leak detector 230 from the respective pressure sensor 212 and the respective flow sensor 214 deployed in the respective production line 208.

In an another example, assuming a plurality of pressure sensors 212 and a single flow sensor 214 are deployed in a compressed air system 202. In such case, the pressure data used by the leak detector 230 may be collected from the pressure sensor 212 located closest to the flow sensor 214, i.e., the pressure sensor 212 which is located at the shortest distance from the single flow sensor 214 among all of the pressure sensors 212 deployed in the compressed air system.

In an another example, assuming a plurality of flow sensors 214 are deployed in a compressed air system 202. In such case, the leak detector 230 may collect flow rate data from the plurality flow sensors 214 and aggregate it, for example, sum, average, and/or the like. Moreover, the leak detector 230 may aggregate the flow rate data collected from the plurality of flow sensors 214 to prevent duplicated readings from multiple sensors, avoid double counting of sensors, and/or the like in order to reduce and/or remove inaccuracies and/or other effects induced in the collected flow rate data due to measurements received from multiple flow sensors 214.

In an another example, assuming single flow sensor 214 and a plurality of pressure sensors 212 are deployed in each of one or more production lines 208 of a compressed air system 202. In such case, the pressure data used to detect leaks in a respective production line 208 may be collected by the leak detector 230 from the pressure sensor 212 which is located closest to the respective flow sensor 214 deployed in the respective production line 208, i.e., the pressure sensor 212 which is located at the shortest distance from the flow sensor 214 deployed in the respective production line 208.

As shown at 106, the leak detector 230 may apply one or more trained ML models to analyze the collected pressure data and flow rate data in order to identify one or more compressed air leaks in the compressed air system 202.

The ML model(s), for example, a neural network, such, as for example, a CNN, an RNN, a DNN, a classifier, an SVM and/or the like, may be trained to identify a plurality of compressed air leak patterns and predict and/or estimate accordingly the probability of (existence) one or more compressed air leaks in the compressed air system 202 based on analysis of pressure and flow rate data provided as input to the ML model(s).

In particular, the **ML** model(s) may be trained to identify compressed air leak patterns based on pressure and flow rate data captured and measured during shutdown events of one or more systems such as the compressed air system 202 during which the consumption of compressed air by clients such as the compressed air clients 204 may be reduced and possibly stopped. This is because during the shutdown events, while the compressed air clients 204 consume little and possibly no compressed air, the main compressed air demand may be traced to compressed air leaks. The ML model(s) trained using pressure and flow rate data captured during the shutdown events may therefor evolve, adjust and adapt to learn and identify patterns which are mostly not induced by consumption (demand) of compressed air by the compressed air clients 204 and may be thus attributed and traced to air leaks.

The ML model(s) may be trained to identify compressed air leak patterns using supervised, semi-supervised, and/or unsupervised learning during which the ML model(s) may be trained using training samples comprising pressure and flow rate data measured in the presence of one or more compressed air leak(s) and while there are no compressed air leaks.

For example, one or more of the ML model(s) may be trained in one or more supervised training sessions using one or more annotated training datasets comprising labeled pressure and flow rate training samples each comprising a label indicative of whether the respective sample comprises pressure and flow rate data measured in a compressed air system 202 having compressed air leak(s) or whether the pressure and flow rate data was captured in a compressed air system 202 having no compressed air leaks.

In another example, one or more of the ML model(s) may be trained in one or more semi-supervised training sessions using one or more annotated training datasets comprising labeled pressure and flow rate training samples which are labeled automatically, as known in the art, based on statistics, weak low level classifiers, partial labeling, and/or the like.

In another example, one or more of the ML model(s) may be trained in one or more unsupervised training sessions using one or more training datasets comprising unlabeled pressure and flow rate training samples. Such ML model(s) which may employ one or more classification algorithms, clustering algorithms, and/or the like may evolve, learn, adjust and adapt to classify and/or cluster the training samples and estimate and/or predict accordingly one or more compressed air leak patterns accordingly.

One or more methods, and/or techniques may be used to collect and/or generate the training samples used to trained the ML model(s) to identify the compressed air leak patterns. For example, the ML model(s) may be trained using one or more general training samples comprising pressure data and flow rate data measured in one or more compressed air systems other than the compressed air system 202 in the presence of one or more compressed air leaks and while there is no leak. In another example, the ML model(s) may be trained using one or more system specific training samples comprising pressure data and flow rate data measured in the specific compressed air system 202 in which the ML model(s) is deployed. In another example, the ML model(s) may be trained using one or more synthetic training samples comprising pressure data and flow rate data generated synthetically, for example, based on simulation, computation, extrapolation and/or the like for one or more compressed air systems such as the compressed air system 202 and/or other such systems. Specifically, the synthetic training samples may be created to comprise pressure data and flow rate data simulating one or more compressed air leaks and also simulating normal operation without leaks.

Optionally, one or more of the ML model(s) may be further trained online after deployed to detect compressed air leaks in the compressed air system 202. The ML model(s) may be trained using operational pressure and flow rate data collected after the ML model(s) is deployed to support leak detection in the compressed air system 202.

Optionally, the ML model(s) may be further trained io identify one or more of the compressed air leak patterns and estimate, predict and/or detect accordingly one or more compressed air leaks based on analysis of aggregated flow rate data aggregating flow rate data measured by a plurality of flow sensors 214 deployed to measure the air flow rate at different locations in the compressed air system 202.

To this end, during its training the ML model(s) may be learned to identify one or more of the compressed air leak patterns using training samples comprising aggregated flow rate captured by a plurality of flow sensors 214 deployed in each of one or more compressed air systems 202. As described herein before, the flow rate captured by a plurality of flow sensors 214 may be aggregated to reduce and/or remove inaccuracies and/or other effects induced in the collected flow rate data due to measurements received from multiple flow sensors 214.

Optionally, the ML model(s) may be further trained to identify one or more of the compressed air leak patterns and estimate, predict and/or detect accordingly one or more compressed air leaks based on analysis of an averaged air flow rate averaging the air flow rate measured during the sampling time period (window) to compensate for compressor load and unload periods of one or more of the air compressor(s) 206. By averaging the air flow rate over the sampling time period and/or part thereof the flow rate may be smoothed and may better express the actual and/or typical air flow rate in the compressed air system 202.

For example, the air compressor(s) 206 may comprise one or more VSD air compressors which may load and unload to deliver compressed air to the compressed air system 202. During load times (periods), while the VSD air compressor(s) delivers compressed air, the air pressure in the compressed air system 202 may increase and affect (e.g. increase) the air flow rate in the compressed air system 202 accordingly. Complementary, during unload time periods, the VSD air compressor(s) may cease (stop) delivering compressed air to the compressed air system 202, the air pressure in the compressed air system 202 may decrease and the air flow rate in the compressed air system 202 may be affected accordingly, for example, reduced.

Optionally, the ML model(s) may be further trained to identify one or more of the compressed air leak patterns and estimate, predict and/or detect accordingly one or more compressed air leaks based on reference pressure and/or reference air flow defining typical demand (consumption) of compressed air in the compressed air system 202 having no compressed air leaks. In other words, the ML model(s) may be trained and adapted to identify one or more compressed air leaks based on one or more Key Performance Indicators (KPI) typical to the compressed air system 202 when operating normally with no compressed air leaks, for example, a typical demand of compressed air by the compressed air client(s) 204. The ML model(s) may be trained to learn the typical demand of compressed air in the compressed air system 202 and may estimate and/or predict there are one or more compressed air leaks in the compressed air system 202 responsive to detecting a. deviation from the typical compressed air demand, for example, a substantial increase in the demand.

Optionally, the ML model(s) may be further trained to identify one or more of the compressed air leak patterns and estimate, predict and/or detect accordingly one or more compressed air leaks based normalized flow rate data in which the air flow rate may be normalized according to the pressure. This means that the values of air flow rate measured during the sampling time period and/or part thereof may be adjusted according to corresponding pressure values measured at the same time in order to normalize the values and compute a common scale unbiased normalized air flow rate. Normalizing the air flow rate may significantly increase performance of the ML model(s), for example, accuracy, precision, reliability consistency, and/or the like since the common scales values may reduce and potentially eliminate local deviations, data degradation and/or anomalies at specific time points.

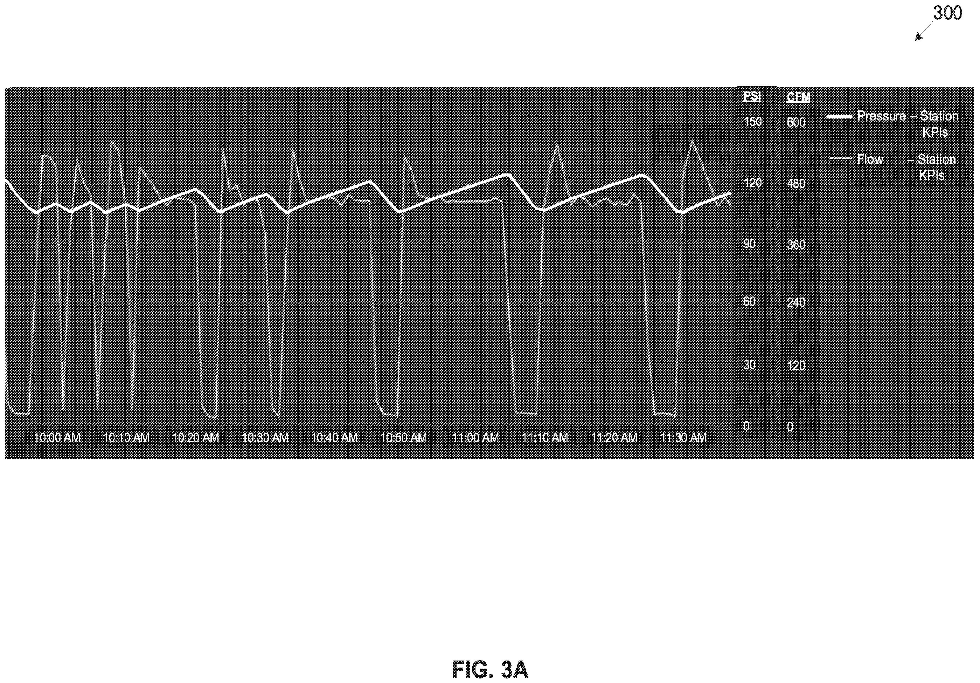

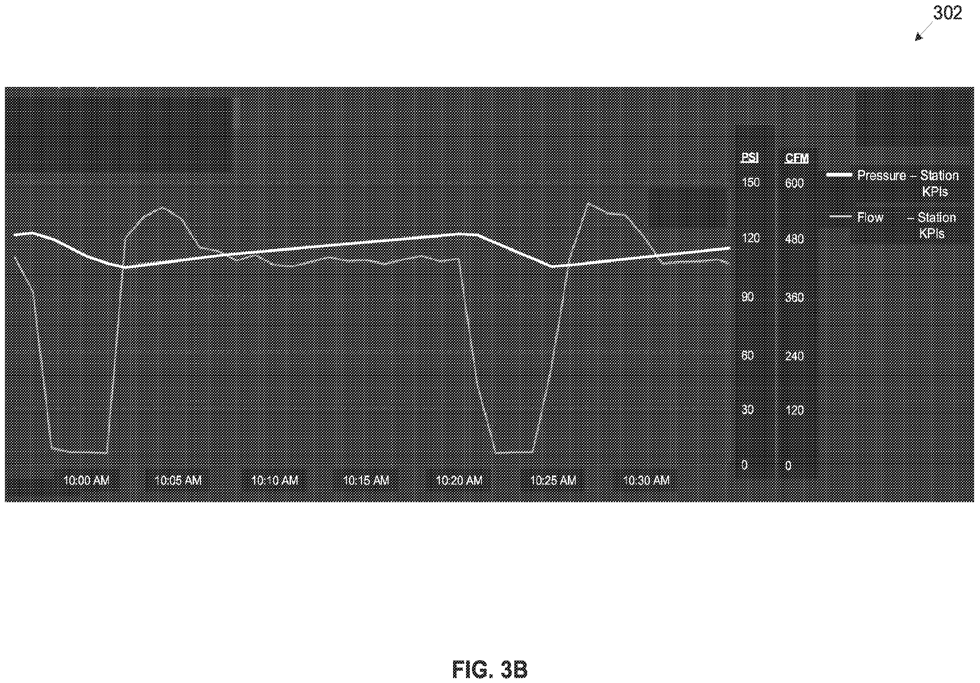

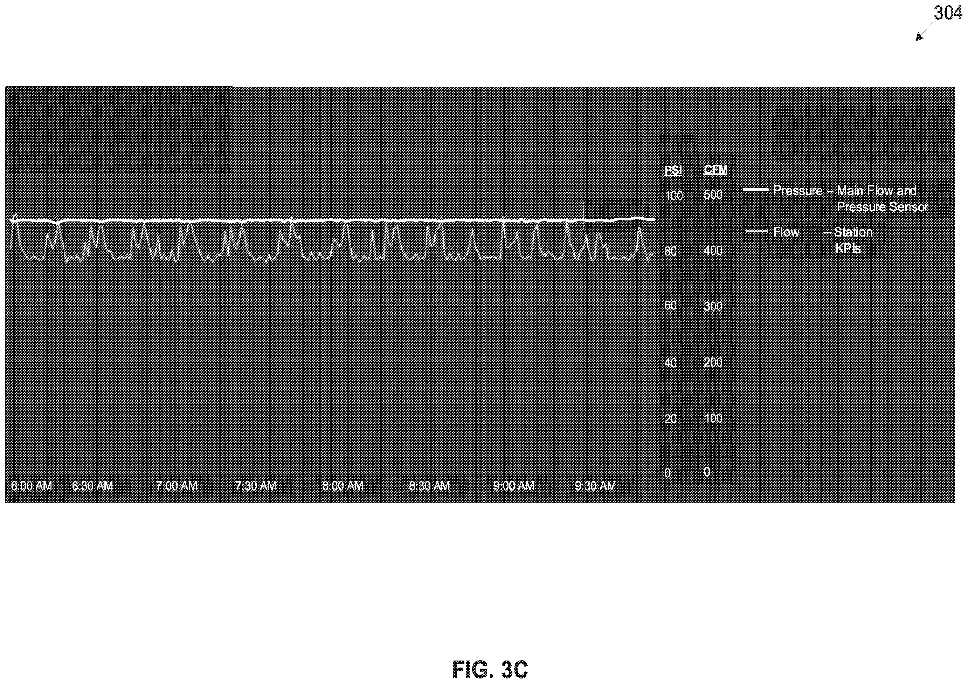

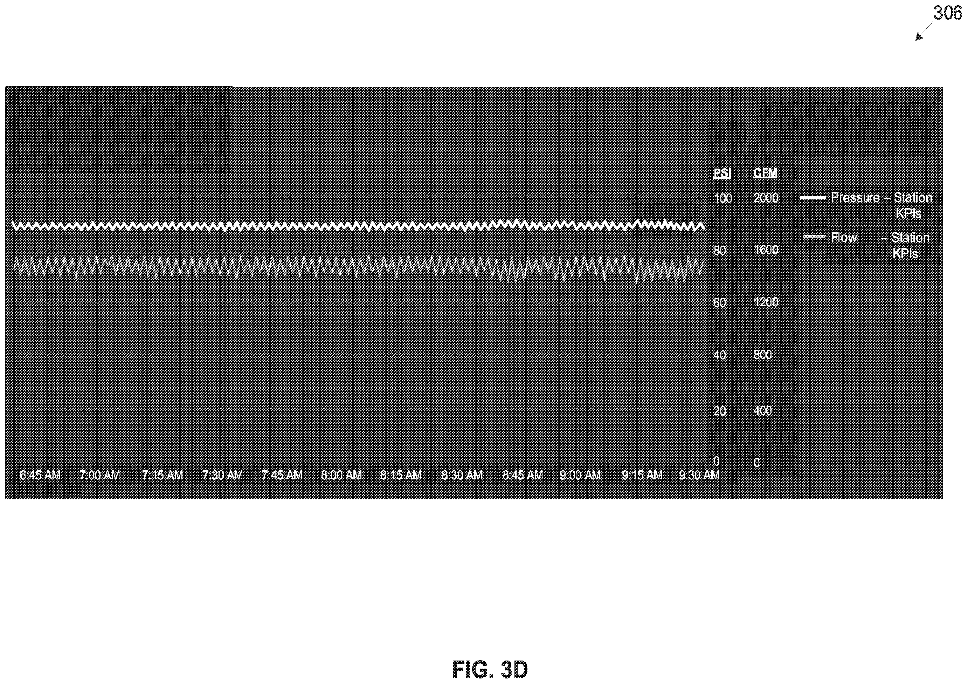

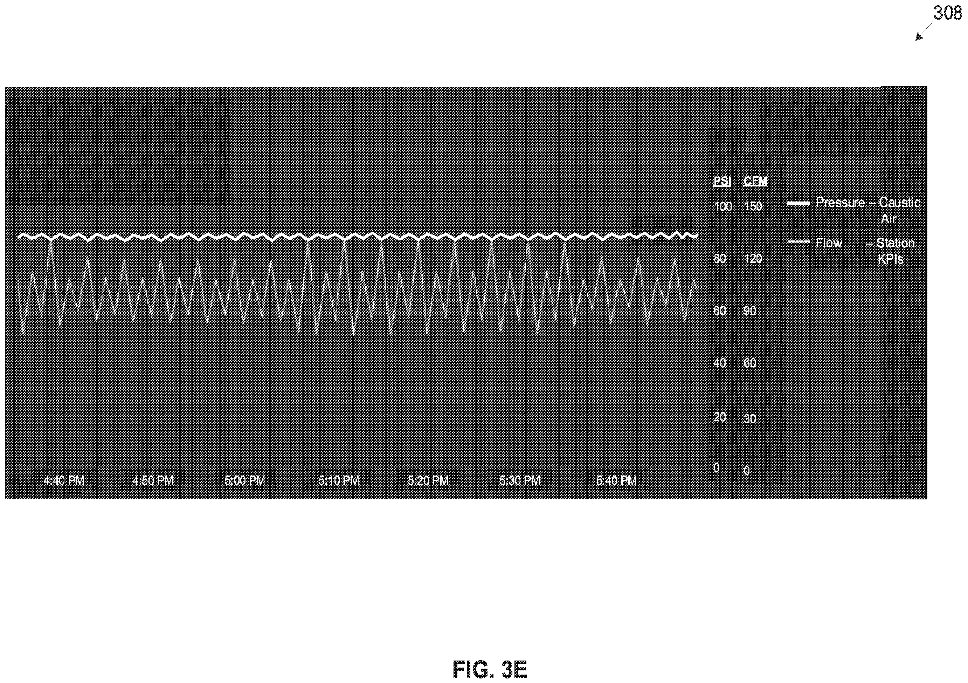

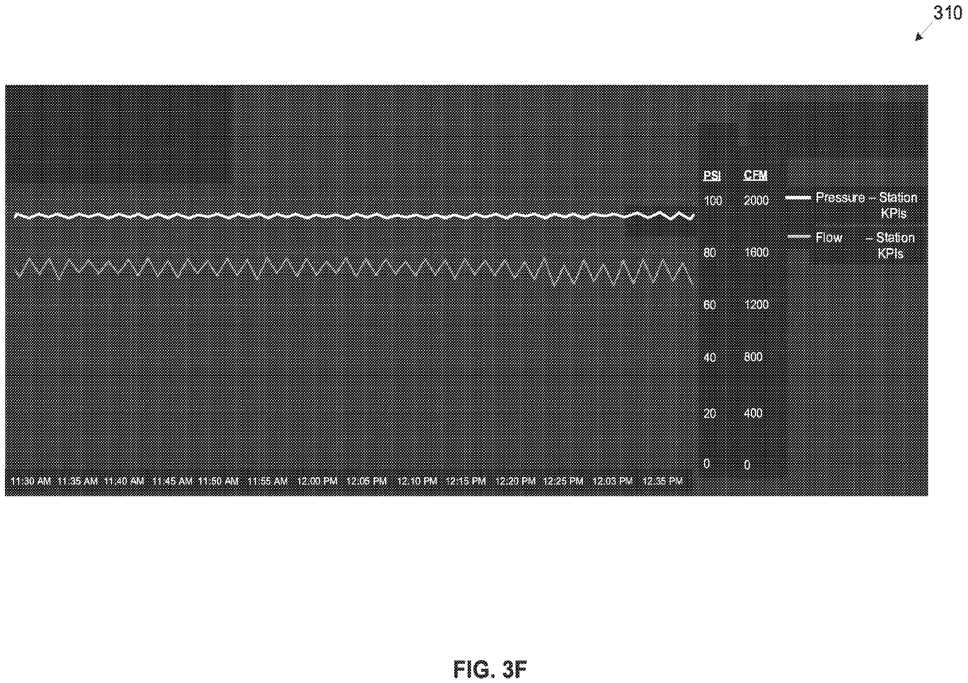

Reference is now made to FIG. 3A, FIG. 3B, FIG. 3C, FIG. 3D, FIG. 3E, and FIG. 3F, which arte graph charts of exemplary compressed air leak patterns learned by trained machine learning models used to detect leaks in compressed air systems, according to some embodiments of the present invention.

One or more ML models used by a leak detector such as the leak detector 230 may be adapted and trained to identify one or more compressed air leak patterns such as exemplary leak patterns presented in flow rate vs. pressure graph charts 300, 302, 304, 306, 308, and 310, and estimate, predict and/or identify one or more compressed air leaks in a compressed air system such as the compressed air system 202.

The air pressure expressed in Pounds per Square Inch (psi) is shown in the graph charts with a brighter line compared to a darker line of the air flow rate expressed in Cubic Feet Per Minute (cfm).

A first exemplary compressed air leak pattern may be expressed by graph chart 300 showing air flow rate vs. pressure in a compressed air system 202 to which compressed air is delivered by a single VSD air compressor such as the air compressor 206. As seen in the graph 300, the pressure graph gradually drops while speed of the VSD compressor is reduced until reaching a minimum speed and turning off (unload) where the air flow rate is close to zero. Since the pressure drops, the VSD air compressor loads again (starts delivering compressed air) and the air flow rate increases to -450 cfm. The pressure increases until reaching some unload (top) threshold where the VSD air compressor is again unloaded. The graph 300 may express a compressed air leak pattern which is seen through the immediate drop in the air pressure following unload of the VSD compressor.

As stated herein before, due to load/unload cycles of the VSD air compressor, the air flow rate may be averaged over multiple cycles, for example, 250 cfm in the graph chart 302. The ML model(s) may be trained and configured accordingly to estimate one or more compressed air leak patterns based on the averaged flow rate.

Another exemplary compressed air leak pattern may be expressed by graph chart 302 showing air flow rate vs. pressure in a compressed air system 202 to which compressed air is delivered by a smaller size VSD air compressor compared to the one delivering the compressed air shown in 300. As seen in the graph 302, due to its smaller size, the load/unload cycles are longer as it takes more time for the VSD air compressor to deliver compressed air until reaching the unload (top) threshold. As graph 300, the graph 302 may express a compressed air leak pattern which is seen through the immediate drop in the air pressure following unload of the VSD compressor.

Another exemplary compressed air leak pattern may be expressed by graph chart 304 showing air flow rate vs. pressure in a compressed air system 202 to which compressed air is delivered by a single VSD air compressor such as the air compressor 206. As seen in the graph 302, the VSD compressor may be constantly working without unloading thus keeping a relatively stable pressure in the compressed air system 202 with minor changes the air flow rate which varies in a range of 380-450 cfm. The graph 304 may express a compressed air leak pattern which is seen through the systematic changes in the air flow rate. However, the VSD compressor may be considered a good fit for the compressed air leak since it is not going into load/unload cycles.

Another exemplary compressed air leak pattern may be expressed by graph chart 306 showing air flow rate vs. pressure in a compressed air system 202 to which compressed air is delivered by two fixed-speed air compressor such as the air compressor 206 which are constantly running without modulation. As seen in the graph 306, the air flow rate closely follows the pressure where the fluctuations may be induced by the client(s) 204 and/or other components of the compressed air system 202 meaning there is a good correlation between the flow and the pressure. The high correlation between the flow and the pressure is highly indicative of a compressed air leak since as stated herein before, the air flowing through a leak is in direct relation with the pressure as opposed to compressed air consumption by compressed air clients 204.

Graph chart 308 shows air flow rate vs. pressure in a compressed air system 202 comprising one or more desiccant dryers consuming compressed air delivered by one or more compressors 206. The fluctuations seen in the graph 308 may be attributed to typical and normal operation of the desiccant dryers which may consume varying levels of compressed air and the air pressure/flow chart is therefore inconclusive as to whether there is a compressed air leak in the compressed air system 202.

Another exemplary compressed air leak pattern may be expressed by graph chart 310 showing air flow rate vs. pressure in a compressed air system 202 which does not include any desiccant dryers. As seen in the chart 310, while there is a good correlation between the air flow and the pressure in the compressed air system 202 the fluctuations in the air flow may be indicative of one or more compressed air leaks in the compressed air system 202 since the air flow induced by leaks directly depends on the pressure as opposed to compressed air clients 204 which may typically consume a substantially constant amount of compressed air regardless of the pressure.

Reference is made once again to FIG. 1.

The trained ML model(s) may be adapted to output an indication of whether the pressure and flow rate data provided as input to the ML model(s) is indicative of one or more compressed air leaks or not based on classification of the input pressure and flow rate data to one or more of the compressed air leak patterns.

The trained ML model(s) may be adapted to compute a probability score indicative of the probability, certainty, confidence and/or the like that the estimation, prediction, and/or classification made by the ML model is correct. The probability score may be assigned in one or more predefined ranges, for example, in a range of 0 to 1, where 0 is the lowest probability and 1 is the highest probability (certainty).

Optionally, as stated herein before in step 102 of the process 100, one or more of the ML model(s) may be further trained to detect one or more of the shutdown events in the compressed air system 202 based on pressure and air flow rate data captured by the pressure sensor(s) 212 and the flow sensor(s) 214 deployed in the compressed air system 202.

In particular, the ML model(s) may be trained to identify shutdown events using training samples comprising air pressure and flow rate data captured and measured in the one or more systems such as the compressed air system 202. During training, the ML model(s) may adapt, evolve and learn to identify, classify, estimate and/or predict a plurality of compressed air consumption patterns typical to shutdown events and to non-shutdown operation, i.e., normal, typical, predefined, and/or allowable compressed air consumption in compressed air systems.

As described for the compressed air leaks estimation, the ML model(s) may be trained to identify shutdown events using supervised, semi-supervised, and/or unsupervised learning.

For example, in one or more supervised training sessions, one or more of the ML model(s) may be trained using annotated training datasets comprising labeled pressure and flow rate training samples each associated with a label indicative of whether the respective sample comprises pressure and flow rate data measured in a compressed air system 202 during shutdown or during normal operation of the compressed air client(s), i.e., non-shutdown.

In another example, one or more of the ML model(s) may be trained in one or more semi-supervised training sessions using one or more annotated training datasets comprising labeled pressure and flow rate training samples which are labeled automatically with shutdown or non-shutdown labels based on statistics, weak low level classifiers, partial labeling, and/or the like as known in the art.

In another example, one or more of the ML model(s) trained in one or more unsupervised training sessions using one or more training datasets comprising unlabeled pressure and flow rate training samples may evolve, learn, adjust and adapt to classify and/or cluster the training samples to classes, specifically a shutdown event class and a non-shutdown class.

As described for the training samples used to train the ML model(s) to identify compressed air leak patterns, the training samples used to train the ML model(s) to identify the shutdown events may be also collected from one or more compressed air systems such as the compressed air system 202 and/or generated synthetically using one or more methods, for example, simulation, computation, extrapolation and/or the like. The training samples used for training the ML model(s) may comprise system specific training samples created using air pressure and flow rate data collected in the specific compressed air system 202. However, the training samples used for training the ML model(s) may comprise general training samples created using air pressure and flow rate data collected and/or generated from one or more compressed air systems other than the compressed air system 202.

Optionally, one or more of the ML model(s) may be further trained online, post deployment, to detect shutdown events in the compressed air system 202.

Optionally, in order to reduce and potentially eliminate false positive shutdown events detections, the ML model(s) may be adapted and trained to filter out one or more estimated shutdown events in the compressed air system 202. For example, the ML model(s) may be adapted to filter out potential shutdown events estimated while the air flow rate in the compressed air system 202 exceeds a certain threshold. The threshold may express one or more conditions, constraints, parameters of the compressed air system 202. For example, the threshold may express a minimal air flow rate in the compressed air system 202 which is indicative of normal and/or typical compressed air consumption by the compressed air client(s) 204.

The minimal air flow rate and optionally flow rate attributes, for example, average flow rate, maximal flow arte, and/or the like which are typical to the compressed air system 202 and/or one or more production lines 208 may be automatically derived from flow rate data captured in the compressed air system 202, for example, through one or more statistical functions applied to analyze and classify the captured flow rate data. Moreover, one or more of the statistical flow rate attributes may bemapped to specific times, for example, time of day, time of week, day of month, and/or the like which may enable using increased accuracy thresholds according to the time of analysis by the ML model(s).

As shown at 108, based on the output of the ML model(s), the leak detector 230 may detect, identify and/or otherwise determine whether there are one or more compressed air leaks in the compressed air system 202.

Optionally, the leak detector 230 may be adapted to estimate an amount and/or percentage of leaked compressed air. Since the compressed air consumed (leaked) in a compressed air leak is directly related and proportional to the pressure in the compressed air system 202, the leak detector 230 may compute and/or estimate the amount of leaked air based on air flow rates measured in the compressed air system 202 for a plurality of corresponding pressure levels.

The leak detector 230 may collect, receive and/or otherwise obtain a plurality of air flow rates measured in the compressed air system 202 by one or more of the flow sensor(s) 214 and a plurality of corresponding pressure levels measured at the same time in the compressed air system 202 by one or more of the pressure sensor(s) 212. As such, each air flow rate (level) may have a corresponding pressure level.

One or more of the plurality of pressure levels may be induced in the compressed air system 202, for example, by one or more elements of the compressed air system 202, for example, a compressed air client 204, a compressed air pipe, a leak, and/or the like. In another example, one or more of the plurality of pressure levels may be induced in the compressed air system 202 as result of one or more conditions, and/or parameters relating to the compressed air system 202, for example, temperature, and/or the like,

In such case, the leak detector 230 may passively collect the pressure and flow rate data measured in the compressed air system 202 by the pressure sensor(s) 212 and the flow sensor(s) 214 in anticipation that a plurality of different pressure levels may be induced in the compressed air system 202.

However, optionally, one or more of the air compressor 206 may be actively controlled to deliver compressed air to induce one or more of the plurality of pressure levels in the compressed air system 202. For example, the leak detector 230 may communicate, via the I/O interface 220, with one or more of the control units such as, for example, SCADA and/or the like deployed to control one or more of the air compressors 206 delivering compressed air to the compressed air system 202 and request the control unit(s) to adjust operation, specifically compressed air delivery, of the air compressor(s) 206 to induce a respective pressure in the compressed air system 202. In another example, the leak detector 230 may directly communicate, via the I/O interface 220, with one or more of the air compressors 206 to adjust their compressed air delivery parameters to induce a respective pressure in the compressed air system 202.

The leak detector 230 may compute a flow to pressure relation based on the plurality of air flow rates measured in the compressed air system 202 and the plurality of corresponding pressure levels. As described herein before, since the flow rate induced by more compressed air leaks is dependent and/or proportional to the pressure, the flow' to pressure relation may be indicative of one or more compressed air leak which induce pressure dependent air flow rate.

The leak detector 230 may then compute, estimate, and/or otherwise infer the amount of compressed air leaked via the compressed air leak(s) in the compressed air system 202 based on the flow to pressure relation which is indicative of the pressure dependent air flow rate induced by the compressed air leak(s).

The leak detector 230 may apply one or more methods, algorithms, formulations, and/or the like to compute and/or infer the amount of leaked compressed air, for example, extrapolation, interpolation, prediction, machine learning, and/or the like.

Table 1 below presents air flow leakage rate in relation to pressure measured for a plurality of exemplary leaks in an exemplary compressed air system such as the compressed air system 202. Each of the compressed air leaks may be characterized by a respective orifice diameter.

**Table 1:**

| Pressure (psig) | Flow Rate (cfm) per Leak Orifice Diameter (inches) | | | | | |
|---|---|---|---|---|---|---|
| | 1/64 | 1/32 | 1/16 | 1/8 | 1/4 | 3/8 |
| 70 | 0.3 | 1.2 | 4.8 | 19.2 | 76.7 | 173 |
| 80 | 0.33 | 1.2 | 5.4 | 21.4 | 85.7 | 193 |
| 90 | 0.33 | 1.5 | 5.9 | 23.8 | 94.8 | 213 |
| 100 | 0.41 | 1.6 | 6.5 | 26.0 | 104 | 234 |
| 125 | 0.49 | 2.0 | 7.9 | 31.6 | 126 | 284 |

- The air flow rates shown in table 1 should be multiplied by 0.97 for wellrounded orifices and by 0.61 for sharp-edged orifices.
- The information presented in table 1 is used with permission from *Fundamentals of Compressed Air Systems Training* offered by the *Compressed Air Challenge.*

Based on extrapolation of the formula derived from the values of table 1, for example, for a leak having a 3/8 inches hole, the leak detector 230 may derive that a 78.57% increase in the pressure ( $\frac{125\ psi}{70\ psi}$ ) yields a 64.16% increase in the flow rate ( $\frac{184\ cfm}{173\ cfm}$ ). The leak detector 230 may thus infer that a 1.2245% increase in pressure may result in a 1% increase in leak flow rate.

The leak detector 230 may further compute the amount of leaked air based on the measured values of flow rate and pressure. For example, since the flow rate of compressed air client 204 is unaffected by the pressure, the leak detector 230 may apply the following formulation for two flow rate values FI and F2 and corresponding pressure values PI and P2:

$$FI = Client\_Consumption\_FlowRate + Air\_Leak\_FlowRate\ at\ P1$$

$$F2 = Client\_Consumption\_FlowRate + Air\_Leak\_FlowRate\ at\ P2$$

$$F2 - F1 = Air\_Leak\_Flow/Rate\ at\ P2 - Air\_Leak\_FlowRate\ at\ PI\ Leak\_FlowRate\ at$$

$$P2 = Leak\_FlowRate\ at\ PI\ *\ (1 + (P2\text{-}P1)/P1\ *\ 1/1.2245)$$

$$F2 - F1 = Leak\_FlowRate\ at\ PI\ *\ (1 + (P2\text{-}P1)/PI\ *\ 1/1.2245) - Leak..FlowRate\ at\ PI$$

$$F2 - FI = Leak\_FlowRate\ at\ PI\ *\ (P2\text{-}P1)/P1\ *\ 1/1.2245\ Leak\_FlowRate\ at\ P1 = (F2\text{-}FI)\ *\ 1.2245\ *\ P1\ /\ (P2\text{-}P1)$$

For example, assuming in an exemplary compressed air system 200 comprising one or more compressed air clients, the following flow rates and pressures are measured:
FI = 50 cfm at PI = 100 psi and F2 = 52.5 cfm at P2 = 110. In such case, the leak detector 230 may apply the above formulation to compute Leak_FlowRate at 100 psi = 30.6125 cfm and Leak_FlowRate at 110 = 33.1125 cfm.

As shown at 110, the leak detector 230 may initiate one or more actions responsive to detecting one or more compressed air leaks in the compressed air system 202.

For example, the leak detector 230 may transmit, via the I/O interface 220, one or more alerts reporting the compressed air leak(s). For example, the leak detector 230 may transmit one or more alert messages to one of more of the control units of the compressed air system 202, for example, SCADA and/or the like which may automatically take further actions and/or initiate operations to circumvent the compressed air leak(s), reduce its impact, and/or the like, In another example, the leak detector 230 may transmit one or more alert messages to one or more client devices, for example, a computer, a mobile device (e.g., Smartphone, tablet, etc.) of one or more users, for example, a controller, a technician, a maintenance person, a manager, and/or the like to inform them of the compressed air leak(s) detected in the compressed air system 202.

In another example, the leak detector 230 may operate, via the I/O interface 220, one or more of the air compressors 206 and/or one or more of the compressed air clients 204 according to the compressed air leak(s) detected in the compressed air system 202. For example, the leak detector 230 may instruct, operate, and/or otherwise control one or more of the air compressors 206 to reduce the pressure in the compressed air system 202 in order to reduce the amount of leaked compressed air. In another example, the leak detector 230 may instruct, operate, and/or otherwise control one or more devices, systems, and/or units of the compressed air system 202, for example, one or more compressed air clients 204 to shut down and stop demanding compressed air and further instruct one or more the air compressor(s)206 to stop delivering compressed air to the compressed air system 202.

In another example, the leak detector 230 may directly operate and/or instruct relevant control unit(s) of the compressed air system 20 to adjust one or more pipes, valves, and/or the like for redirecting flow of compressed air in the compressed air system 202 to bypass detected compressed air leak(s).

The descriptions of the various embodiments of the present invention have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant systems, methods and computer programs will be developed and the scope of the terms pressure sensing technologies, ML models, and classification algorithms are intended to include all such new technologies a priori.

As used herein the term "about" refers to ± 10 %.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, an instance or an illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals there between.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable sub-combination or as suitable in any other described embodiment of the invention. Certain features described in the context of various embodiments are not to be considered essential features of those embodiments, unless the embodiment is inoperative without those elements.

Although the invention has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims.

It is the intent of the applicant(s) that all publications, patents and patent applications referred to in this specification are to be incorporated in their entirety by reference into the specification, as if each individual publication, patent or patent application was specifically and individually noted when referenced that it is to be incorporated herein by reference. In addition, citation or identification of any reference in this application shall not be construed as an admission that such reference is available as prior art to the present invention. To the extent that section headings are used, they should not be construed as necessarily limiting. In addition, any priority document(s) of this application is/are hereby incorporated herein by reference in its/their entirety.

**Claims**

1. A computer implemented method of detecting leaks in a compressed air system using machine learning (ML), comprising:

    identifying at least one shutdown event in a compressed air system comprising at least one compressed air client consuming compressed air delivered by at least one air compressor, during the at least one shutdown event demand of compressed air by the at least one compressed air client is at least partially reduced;
    receiving pressure data and flow rate data measured in the compressed air system during the at least one shutdown event; and
    detecting at least one compressed air leak in the compressed air system using at least one trained ML model applied to the pressure data and the flow rate data, the at least one trained ML model is trained to identify a plurality of compressed air leak patterns based on pressure and flow rate data.

2. The method of claim 1, wherein the at least one trained ML model is trained to detect the at least one compressed air leak based on analysis of the pressure data and the flow rate data accumulated during a predefined time period.

3. The method of claim 1, wherein the pressure data and the flow rate data are measured by at least one pressure sensor and at least one flow sensor respectively which are deployed in the compressed air system.

4. The method of claim 3, wherein the pressure data used for detecting the at least one compressed air leak is measured by at least one selected closest pressure sensor which is located at a shortest distance from the at least one flow sensor among a plurality of pressure sensors deployed in the compressed air system.

5. The method of claim 3, wherein the at least one trained ML model is further trained to detect the at least one compressed air leak based on analysis of aggregated flow rate data aggregating flow rate data measured by a plurality of flow sensors deployed to measure the air flow rate at different locations in the compressed air system.

6. The method of claim 1, wherein the at least one trained ML model is further trained to detect the at least one compressed air leak based on analysis of an averaged air flow rate averaging the measured air flow rate to compensate for compressor load and unload periods.

7. The method of claim 1, wherein the at least one trained ML model is further trained to detect the at least one compressed air leak based on reference pressure and/or reference air flow defining typical demand of compressed air in the compressed air system having no compressed air leaks.

8. The method of claim 1, wherein the at least one trained ML model is further trained to detect the at least one compressed air leak based on normalized flow rate data in which the air flow rate is normalized according to the pressure.

9. The method of claim 1, further comprising estimating an amount of leaked compressed air by:

    receiving a plurality of air flow rates measured in the compressed air system for a plurality of corresponding pressure levels,
    computing a flow to pressure relation based on the plurality of measured air flow rates and the plurality of corresponding pressure levels, the flow to pressure relation is indicative of the at least one compressed air leak which induces a pressure dependent air flow rate, and
    inferring the amount of leaked compressed air based on the flow to pressure relation which is indicative of a pressure dependent air flow rate induced by the at least one air leak.

10. The method of claim 9, further comprising actively controlling the at least one air compressor to deliver compressed air to induce the plurality of pressure levels in the compressed air system.

11. The method of claim 1, wherein the at least one shutdown event is identified by the at least one trained ML model which is further trained to detect at least one shutdown event based on measured pressure data and flow rate data.

12. The method of claim 11, wherein the at least one trained ML model is further trained to filter out at least one potential shutdown event detected while the air flow rate in the compressed air system exceeds a certain threshold.

13. The method of claim 1, wherein the at least one shutdown event is identified according to an indication received from at least one control unit of the compressed air system.

14. The method of claim 1, wherein the at least one trained ML model is trained to identify at least one of the plurality of compressed air leak patterns using a plurality of training samples comprising pressure data and flow rate data measured in at least one another compressed air system having at least one compressed air leak and not having compressed air leaks.

15. The method of claim 1, wherein the at least one trained ML model is trained to identify at least one of the plurality of compressed air leak patterns using a plurality of training samples comprising pressure data and flow rate data measured in the at least one compressed air system while having at least one compressed air leak and while not having compressed air leaks.

16. The method of claim 1, further comprising transmitting at least one alert reporting the at least one detected compressed air leak.

17. A system for detecting leaks in a compressed air system using machine learning (ML), comprising:
at least one processor configured to execute a code, the code comprising:

code instructions to identify at least one shutdown event in a compressed air system comprising at least one compressed air client consuming compressed air delivered by at least one air compressor, during the at least one shutdown event demand of compressed air by the at least one compressed air client is at least partially reduced;
code instructions to receive pressure data and flow rate data and flow rate data measured in the compressed air system during the at least one shutdown event; and
code instructions to detect at least one compressed air leak in the compressed air system using at least one trained ML model applied to the pressure data and the flow rate data, the at least one trained ML model is trained to identify a plurality of compressed air leak patterns based on pressure and flow rate data.

100

102

IDENTIFY SHUTDOWN EVENT OF A
COMPRESSED AIR SYSTEM

104

RECEIVE PRESSURE AND FLOW RATE DATA
MEASURED DURING THE SHUTDOWN EVENT

106

APPLY ONE OR MORE TRAINED ML MODELS TO
ANALYZE THE PRESSURE AND FLOW RATE
DATA

108

DETECT ONE OR MORE LEAKS IN THE
COMPRESSED AIR SYSTEM BASED ON THE
OUTPUT OF THE ML MODEL(s)

110

INITIATE ONE OR MORE ACTIONS RESPONSIVE
TO DETECTION OF LEAK(s)

FIG. 1

FIG. 2

FIG. 3A

FIG. 3B

EP 4 431 899 A1

304

Pressure – Main Flow and
Pressure Sensor

— Pressure

— Flow

— Station
KPIs

| PSI | CEM |
|---|---|
| 100 | 500 |
| 80 | 400 |
| 60 | 300 |
| 40 | 200 |
| 20 | 100 |
| 0 | 0 |

6:00 AM  6:30 AM  7:00 AM  7:30 AM  8:00 AM  8:30 AM  9:00 AM  9:30 AM

**FIG. 3C**

**FIG. 3D**

EP 4 431 899 A1

FIG. 3E

FIG. 3F

Europäisches
Patentamt

European
Patent Office

Office européen
des brevets

# EUROPEAN SEARCH REPORT

Application Number

EP 24 16 3681

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2012/247189 A1 (FINLAY GEOFF [CA])<br>4 October 2012 (2012-10-04)<br>* paragraph [0033] - paragraph [0067];<br>figures *<br>* paragraph [0086] - paragraph [0160] *<br>----- | 1-5,7,<br>9-17<br>6,8 | INV.<br>G01M3/26<br>G01M3/28 |
| A | US 2022/275610 A1 (BOHORQUEZ AREVALO<br>JESSICA MARIA [AU] ET AL)<br>1 September 2022 (2022-09-01)<br>* abstract; claims; figures *<br>----- | 1-17 | |
| A | BE 1 026 966 A1 (ATLAS COPCO AIRPOWER NV<br>[BE]) 6 August 2020 (2020-08-06)<br>* the whole document *<br>----- | 1-17 | |

TECHNICAL FIELDS
SEARCHED      (IPC)

G01M

The present search report has been drawn up for all claims

| Place of search | Date of completion of the search | Examiner |
|---|---|---|
| The Hague | 10 July 2024 | Amroun, Sébastien |

EPO FORM 1503 03.82 (P04C01)

## ANNEX TO THE EUROPEAN SEARCH REPORT
## ON EUROPEAN PATENT APPLICATION NO.

EP 24 16 3681

This annex lists the patent family members relating to the patent documents cited in the above-mentioned European search report.
The members are as contained in the European Patent Office EDP file on
The European Patent Office is in no way liable for these particulars which are merely given for the purpose of information.

10-07-2024

| Patent document cited in search report | | Publication date | Patent family member(s) | | Publication date |
|---|---|---|---|---|---|
| US 2012247189 | A1 | 04-10-2012 | US 2012247189 A1 | | 04-10-2012 |
| | | | WO 2012129698 A1 | | 04-10-2012 |
| US 2022275610 | A1 | 01-09-2022 | AU 2020325058 A1 | | 17-03-2022 |
| | | | EP    4007899 A1 | | 08-06-2022 |
| | | | US 2022275610 A1 | | 01-09-2022 |
| | | | WO 2021022315 A1 | | 11-02-2021 |
| BE 1026966 | A1 | 06-08-2020 | BE    1026966 A1 | | 06-08-2020 |
| | | | EP    3903248 A1 | | 03-11-2021 |

EPO FORM P0459

For more details about this annex : see Official Journal of the European Patent Office, No. 12/82